# EUROPÄISCHE PATENTSCHRIFT

(11) **EP 3 015 811 B1**
(45) Veröffentlichungstag und Bekanntmachung des Hinweises auf die Patenterteilung: **06.03.2019**
(21) Anmeldenummer: 15190042.0
(22) Anmeldetag: 15.10.2015
(51) Int. Cl.: F41A 1/08, F41F 3/045, F42B 5/05, F02K 9/95, F02K 9/74

(54) **AKTIVE BREMSUNG EINES AUSSTOSSTRIEBWERKS**
ACTIVE BRAKING OF AN EJECTING ENGINE
FREINAGE ACTIF D'UN PROPULSEUR D'EJECTION

(30) Priorität: 29.10.2014 DE 102014115721
(43) Veröffentlichungstag der Anmeldung: 04.05.2016
(73) Patentinhaber: Bayern-Chemie Gesellschaft für flugchemische Antriebe mbH, 84544 Aschau am Inn (DE)
(72) Erfinder: Hacker, Andreas, 83536 Gars (DE); Bartinger, Franz, 84494 Neumarkt-St. Veit (DE)
(74) Vertreter: LS-MP von Puttkamer Berngruber Loth Spuhler

(56) Entgegenhaltungen:
- CH-A- 254 280
- DE-U- 1 740 740
- FR-A1- 2 260 078
- US-A- 3 815 469
- US-A- 4 050 351

## Beschreibung

Die Erfindung betrifft eine Vorrichtung umfassend ein Haupttriebwerk und ein von diesem trennbares Ausstosstriebwerk zur Beschleunigung des Haupttriebwerks nach Anspruch 1.

Sie bezieht sich nicht zuletzt auf eine derartige Vorrichtung für schultergestützte Waffen.

Ausstossvorrichtungen, nachfolgend auch Startvorrichtungen genannt, für Triebwerke gleich welcher Art, insbesondere in der Ausgestaltung von Abschussvorrichtungen für Flugkörper, insbesondere raketenartige Geschosse, weisen häufig ein Ausstosstriebwerk, auch Starttriebwerk genannt, und ein sogenanntes Haupttriebwerk, auch Marschtriebwerk oder Flugtriebwerk genannt, auf.

Das Haupttriebwerk wird von einem Ausstosstriebwerk, zu seinem Ausstoss aus der Startvorrichtung beschleunigt und mittels eines Geräts, z.B. eines Verzögerungszünders, erst dann gezündet, wenn es sich mit dem Gefechtskopf nach dem Ausstossen in einer für den Schützen ungefährlichen Entfernung ausserhalb der Ausstossvorrichtung befindet. Das Haupttriebwerk wird dabei von dem Ausstosstriebwerk getrennt.

Aus der DD 301 649 A7 ist eine Panzerabwehrrakete zur Bekämpfung von gepanzerten Fahrzeugen bekannt.

Die Panzerabwehrrakete umfasst je ein Ausstosstriebwerk und ein Marschtriebwerk. Zwischen beiden Triebwerken ist eine Trennwand angeordnet.

Die Trennwand weist mehrere Schubdüsen auf, die gleichzeitig Verzögerungssätze für die Treibladung des Marschtriebwerks aufnehmen.

Aus dem Dokument CH 254 280 ist eine Vorrichtung zur Rückstossdämpfung einer Laufwaffe bekannt, bei der eine Brennkammer zwei Ladungen umfasst. Die eine Ladung dient dabei dem Antrieb eines Geschosses, während die andere Ladung im hinteren Teil der Brennkammer untergebracht ist und als Dämpfungsladung wirkt.

Aus der US-Patentanmeldug 4,050,351 A ist eine Vorrichtung bekannt, die über ein Projektil und bremsendes Bauteil verfügt, die zu einer festen Einheit verbunden sind. Die Detektierbarkeit des Abschussvorrichtung nach dem Zünden wird durch eine Ladung mit Sandkörnern herabgesetzt.

Das Dokument DE 17 40 740 U1 beschreibt ein Geschoss für Geschütze mit beiderseits offenem Rohr und Rückstossbremsen. Die Vorrichtung weist eine Brennkammer und Düsenausführung auf, die miteinander abgestimmt sind, um einen Rückstoß herbeizuführen, welcher von der Bremsvorrichtung des Geschützes aufgenommen wird.

Die französische Druckschrift FR 2 260 078 A1 offenbart eine weitere Ausgestaltung einer Vorrichtung zur Beschleunigung eines Haupttriebwerks aus einer Startvorrichtung.

Bekannte Ausstosstriebwerke erweisen sich als nachteilig, da sie nach erfolgter Zündung und nach erfolgtem Start des Haupttriebwerks aus der Startvorrichtung ausgestoßen werden und im Umfeld vor der Startvorrichtung auf den Boden fallen. Dies hat zur Folge, dass die Startvorrichtung über das ausgestoßene Ausstosstriebwerk z.B. durch Lichtsensoren oder Wärmesensoren geortet werden kann.

Ein weiterer Nachteil liegt darin, dass der aus der Startvorrichtung herausgestoßene Treibsatz im großen Umfang Wärmeenergie ausstrahlt, die zu Verletzungen bei umstehenden Personen sowie beim Bediener selbst führen kann. Bewuchsmaterial auf dem Boden kann sich entzünden und zu einem Flächenbrand ausweiten, was ebenfalls zur Entdeckung der Startvorrichtung führen kann.

Ein Nachteil ist es ferner, dass die Flugkörpermasse durch das zunächst mitfliegende Ausstosstriebwerk erhöht ist, was auch bei schultergestützten Startvorrichtungen problematisch ist.

Zudem ist die Ausgestaltung der Schnittstelle zwischen dem Heck des Haupttriebwerks und dem Ausstosstriebwerk, insbesondere was Raum und Masse anbelangt, komplex.

Des Weiteren kann ein Ausstoss und Aufschlagen des Treibsatzes im Bereich vor dem Bediener zur Freisetzung von Schadstoffen führen, die den Bediener der Startvorrichtung verletzen oder anderweitig beeinträchtigen können. Diese Gefahr besteht insbesondere bei schultergestützten Waffen.

Die Erfindung stellt sich daher die Aufgabe, eine Startvorrichtung bereitzustellen, die die genannten Nachteile eines vor dem Bedieners auf dem Boden aufschlagenden Treibsatzes vermeidet und somit eine Detektierbarkeit der Startvorrichtung oder eine Verletzung oder Beeinträchtigung des Bedieners oder anderer Personen in seinem Umfeld umgeht.

Des Weiteren soll die Masse der zu beschleunigenden Teile reduziert werden. Auch ist es angestrebt, die Schnittstelle zwischen Haupttriebwerk und Ausstosstriebwerk einfacher auszugestalten. Wünschenswert ist es auch, wenn die Startvorrichtung schubneutral ausgestaltet werden könnte.

Die Aufgabe wird durch die Vorrichtung nach Anspruch 1 gelöst. Vorteilhafte Ausgestaltungen sind in den Unteransprüchen aufgeführt.

Die Vorrichtung umfasst eine Einrichtung zur Führung des Haupttriebwerks und ein Ausstosstriebwerk. Das Ausstosstriebwerk weist zur Erzeugung eines Startschubs wenigstens eine Brennkammer auf. Es verfügt über Mittel, die zu seiner Abbremsung nach dem Ausstoss des Haupttriebwerks führen.

Das Ausstosstriebwerk verbleibt nach Start des Haupttriebwerks in der Startvorrichtung. Zu diesem Zweck ist das Ausstosstriebwerk lösbar mit dem Haupttriebwerk verbunden.

Die Erfindung versteht unter dem Begriff Haupttriebwerk ein technisches Gerät, das geeignet ist, in einem Luftraum zu fliegen. Es kann insbesondere anderere Bestandteile eines flugtauglichen Gerätes, z.B. Flügel, die Außenwand des Fluggerätes, Elektronik, Leitungen etc. mit umfassen.

Der Begriff Haupttriebwerk erstreckt sich mithin auch auf das Fluggerät als solches, wenngleich der Fokus der vorliegenden Erfindung auf die Antriebsseite dieses Fluggerätes gerichtet ist.

Haupttriebwerk kann z.B. ein Raketentriebwerk, eine Drohne oder ähnliches unbemanntes Gerät sein, gleichgültig ob beispielsweise feststoffangetrieben, flüssig- oder gelstoff- oder gasangetrieben.

Das Haupttriebwerk kann z.B. ein Lenkflugkörper sein und als Waffensystem ausgebildet sein.

Haupttriebwerke werden sowohl für zivile als auch für militärische Zwecke eingesetzt. Die zivile Nutzung ist vorzugsweise kommerzieller Natur und dient z.B. der Telekommunikation oder wissenschaftlichen Aufgaben.

Andererseits werden Haupttriebwerke besonders bevorzugt für militärische Zwecke eingesetzt.

Das Haupttriebwerk kann in gleicher Weise Kommunikations- und/oder Aufklärungszwecken dienen.

Das Haupttriebwerk erfüllt darüber alternativ auch andere Aufgaben. Dabei ist es z.B. als Marschflugkörper ausgebildet, der über eine eigene Steuerungseinheit verfügt. Mit Hilfe der Steuerungseinheit ist der Marschflugkörper während des gesamten Fluges kontrollierbar und lenkbar.

Die Startvorrichtung ist typischerweise eine Abschusseinrichtung.

Sie kann als Startrohr ausgestaltet sein.

Die Startvorrichtung nimmt vorzugsweise neben dem Haupttriebwerk, dem Ausstosstiebwerk auch sonstige Teile auf, wie z.B. Schienen für das Haupttriebwerk, Kohlefaserbestandteile.

Die Startvorrichtung kann schultergestützt auf einem Schützen oder auf einem Fahrzeug, Schiff, Flugzeugen oder sonstigen bewegbaren Vorrichtungen oder stationär angeordnet sein.

Die Startvorrichtung ist eine transportable oder fest installierte Vorrichtung, die das Haupttriebwerk bis kurz vor seinem Start aufnimmt.

Die Startvorrichtung umfasst vorzugsweise Versorgungsleitungen und Messkabel, mit denen das Haupttriebwerk verbindbar ist, und die vor dem Start abtrennbar sind.

Die Startvorrichtung dient der möglichst schnellen Beschleunigung des Haupttriebwerks, da insbesondere Leitwerke des Haupttriebwerks zur Stabilisierung der Flugbahn die umströmende Luft benötigen.

Die Startvorrichtung kann ein zylindrischer oder rohrförmiger oder eine andere geometrische Form aufweisender Hohlkörper sein.

Der Hohlkörper weist vorzugsweise eine umlaufende Seitenwand auf, die an einer Stirnseite zur Ausbildung einer Kompressionskammer geschlossen ist.

In einer anderen Ausführungsform ist der Hohlkörper der Startvorrichtung an seinen beiden Stirnseiten offen, so dass das aus der Hauptdüse des Haupttriebwerks austretende Schubgas beim Start des Haupttriebwerks an der rückwärtigen Stirnseite der Startvorrichtung aus dieser entweichen kann.

Die insbesondere rohrförmige Startvorrichtung weist ein Ausstosstriebwerk zum Ausstoss eines Haupttriebwerks auf.

Die Zündung des Ausstosstriebwerks initiiert die Beschleunigung und den Ausstoss des Haupttriebwerks aus der Startvorrichtung. Das Ausstosstriebwerk bewirkt den Startschub des Haupttriebwerks.

Der Treibstoff ist dabei so ausgelegt, dass das Haupttriebwerk und das Ausstosstriebwerk in gewünschter Weise beschleunigt werden. Dieser Vorgang läuft typischerweise in Millisekunden ab.

Erfindungsgemäß bewegen sich beide Triebwerke in Ausstossrichtung nach vorne. Während das Haupttriebwerk die Ausstossvorrichtung verlässt und im Anschluss daran nach vorbestimmten Parametern gezündet wird, verbleibt das Ausstosstriebwerk in der Ausstossvorrichtung, nachdem es die Beschleunigung des Haupttriebwerks bewirkt hat.

Das Ausstosstriebwerk ist deshalb zum Verbleib in der Startvorrichtung lösbar mit dem Haupttriebwerk verbunden oder liegt an dem Haupttriebwerk ohne Verbindung an.

Um nach dem Ausstoss des Haupttriebwerks aus der Startvorrichtung einen Verbleib des Ausstosstriebwerkes in der Startvorrichtung zu bewirken, ist das Ausstosstriebwerk in der Startvorrichtung mit Hilfe eines integrierten Gegenschubs abbremsbar.

In einer ersten Ausführungsform der Erfindung ist der Gegenschub erzielbar durch eine verzögerte Zündung eines Bremstriebwerkes zur Generierung des Gegenschubes.

Das Ausstosstriebwerk umfasst in dieser Ausführungsform deshalb eine Hauptbrennkammer, eine Hauptdüse, den Haupttreibstoff sowie ein Verzögerungselement.

Ferner umfasst das Bremstriebwerk als funktionaler und bevorzugt auch konstruktiver Bestandteil des Ausstosstriebwerks eine Gegenschubbrennkammer, wenigstens eine Gegenschubdüse sowie Gegenschubtreibstoff.

Die Düse bezeichnet eine vorzugsweise röhrenförmige technische Einrichtung. Der Flächeninhalt der technischen Einrichtung ist auf seiner gesamten Länge gleich, oder erweitert oder verjüngt. Darüber hinaus kann er jede denkbare komplexe Form aufweisen.

Die Düse bewirkt eine Umlenkung eines Schubgas- oder Flüssigkeitsstroms. Sie wandelt Druck in Bewegungsenergie um oder verteilt feste, viskose, flüssige oder gasförmige Substanzen gleichmäßig im Inneren der Düse.

Im Inneren der Düse kann je nach Bedarf eine Strömung mit Unterschallgeschwindigkeit oder mit Überschallgeschwindigkeit fließen.

Der Haupttreibstoff und der Gegenschubtreibstoff werden nachfolgend auch als Treibsatz bezeichnet.

Der Treibsatz ist der Treibstoff für das Ausstosstriebwerk.

Ein Treibsatz ist eine Treibladung, die insbesondere einen Satz von chemischen Substanzen in fester, flüssiger oder gasförmiger Form umfasst.

Der Treibsatz ist ein Energieträger, der bei der Aktivierung der chemischen Substanzen ein großes Volumen anstrebt, und auf diese Weise in der Lage ist, ein Objekt, insbesondere einen Haupttriebwerk zu bewegen.

Der Treibsatz hat die Aufgabe, ein lenkbares oder nicht lenkbares Haupttriebwerk durch die Erzeugung von Schubgas in der Startvorrichtung zu beschleunigen und aus der Startvorrichtung herauszutreiben.

Dazu brennt der Treibsatz nach der Zündung ab und erzeugt das Schubgas in Form der entstandenen Verbrennungsgase. Zur Erhöhung des Drucks kann das Schubgas zusätzlich komprimiert werden.

Treibsätze können insbesondere nitrocellulose Pulver oder Schwarzpulver umfassen. Es versteht sich von selbst, dass der erfindungsgemäße Treibsatz darüber hinaus andere, den Startschub bewirkende feste, viskose, flüssige oder gasförmige Stoffe umfassen kann.

Erfindungsgemäß weist das Ausstosstriebwerk wenigstens zwei Treibsätze mit einander entgegengesetzter Wirkungsrichtung auf.

Hierzu weist das Ausstosstriebwerk eine auf das Haupttriebwerk wirkende Hauptdüse und eine in entgegengesetzter Richtung auf den Treibsatz wirkende Gegenschubdüse auf.

Das Ausstosstriebwerk umfasst mithin wenigstens eine Hauptbrennkammer, in der der Haupttreibstoff angeordnet ist, der der Beschleunigung des Haupttriebwerks zum Zweck des Austritts aus der Startvorrichtung dient.

Mit Zündung des Treibsatzes entsteht in der Hauptbrennkammer ein Verbrennungsgas, das durch die mit der Hauptbrennkammer verbundene Düse, insbesondere einer Hauptdüse, entweicht und auf diese Weise das Haupttriebwerk antreibt.

Das Haupptriebwerk ist dabei in der Ausstossvorrichtung vorzugsweise schienengeführt.

Um nach dem Ausstoss des Haupttriebwerks aus der Ausstossvorrichtung ein Verbleiben des Ausstosstriebwerkes in der Startvorrichtung sicherzustellen, ist das Ausstosstriebwerk mittels eines integrierten Gegenschubs abbremsbar.

Deshalb umfasst das Ausstosstriebwerk wenigstens eine Gegenschubbrennkammer, in der der Gegenschubtreibstoff angeordnet ist, damit das Ausstosstriebwerk in der Ausstossvorrichtung verbleibt, nachdem das Haupttriebwerk die Ausstossvorrichtung verlassen hat.

Hierzu weist das Ausstosstriebwerk weiter wenigstens eine in entgegengesetzter Ausstossrichtung auf das Ausstosstriebwerk wirkende Gegenschubdüse auf.

Die auf das Ausstosstriebwerk wirkende wenigstens eine Gegenschubdüse umfasst ein Element, das die Zündung des Ausstosstriebwerks in die Gegenrichtung zur Ausstossrichtung verzögert.

In dieser Ausführungsform weist das Ausstosstriebwerk einen weiteren Treibsatz auf, der zeitverzögert zündbar ist und der der wenigstens einen Gegenschubdüse das Schubgas zuführt. Die Gegenschubdüse wirkt der Hauptdüse entgegen.

Dadurch tritt eine Bremswirkung ein, aufgrund derer das Ausstosstriebwerk in der Ausstossvorrichtung verbleibt.

Mithin erfolgt eine Trennung zwischen Haupttriebwerk und Ausstosstriebwerk.

In einer zweiten Ausführungsform der Erfindung ist der Gegenschub erzielbar durch eine mechanische Umlenkung des Startschubes.

Hierzu umfasst das Ausstoßtriebwerk eine Brennkammer, eine Hauptdüse, eine die Brennkammer mit der Hauptdüse verbindende Hauptleitung und eine verschiebbare Gegendüse, einen Zünder sowie ein Ventil.

Bei dieser Ausführungsform ist an eine Hauptleitung zwischen dem Ausstosstriebwerk und der Hauptdüse wenigstens eine Gegenschubleitung angeschlossen, die das Schubgas wenigstens einer Gegenschubdüse zuführt. Dabei ist die Wirkungsrichtung der Gegenschubdüse der Hauptdüse entgegengerichtet.

Die Hauptdüse wirkt auf das Haupttriebwerk ein, wogegen die wenigstens eine Gegenschubdüse in entgegengesetzter Richtung auf das Ausstosstriebwerk wirkt.

In der Gegenschubleitung und/oder der Hauptleitung ist wenigstens ein Ventil angeordnet, das dem Schubgas den Zugang aus der Hauptleitung in die wenigstens eine Gegenschubleitung eröffnet oder umgeleitet.

Das Ventil wird Zeit- oder Weggesteuert betätigt.

Die Erfindung ermöglicht ein aktives Abbremsen des Triebwerkes, sodass beim Start des Haupttriebwerks eine Verbindung des Triebwerkes mit der Startvorrichtung der Startvorrichtung erhalten bleibt.

Der Gegenschub wird vorzugsweise durch eine mechanische Umlenkung des Startschubs oder besonders bevorzugt durch eine verzögerte Zündung eines weiteren Treibsatzes bewirkt.

Die Erfindung erweist sich in beiden Ausführungsformen als vorteilhaft, da wegen des Verbleibs des Ausstosstriebwerks in der Startvorrichtung eine thermale Detektierbarkeit der Startvorrichtung reduziert werden kann.

Hierzu trägt weiterhin bei, dass zwischen der Innenmantelfläche der Startvorrichtung, also etwa des Startrohrs, und den Triebwerken etwa durch die im Inneren angeordneten Führungsschienen für das Haupttriebwerk Luft verbleibt, die bekanntermaßen ein schlechter Wärmeleiter ist.

Ferner tragen zur Reduzierung der Wärmedetektierbarkeit auch vorteilhafterweise innerhalb der Startvorrichtung herkömmlicherweise angeordnete Dämmungskörper aus Kohlefaserstoffen bei.

Zusätzlich kann die Masse des Haupttriebwerks um die Masse des Triebwerks verringert werden.

Ein weiterer Vorteil besteht darin, dass im Heck des Haupttriebwerks eine einfache Schnittstelle den Haupttriebwerk vom Ausstosstriebwerk trennt, so dass das Ausstosstriebwerk nach Start des Haupttriebwerks mit der Startvorrichtung der Startvorrichtung verbunden bleibt.

Die Startvorrichtung der Startvorrichtung ist somit schubneutral.

Weitere Ausführungsformen und Vorteile der Erfindung sind anhand der Zeichnung erkennbar. Hierbei zeigen:

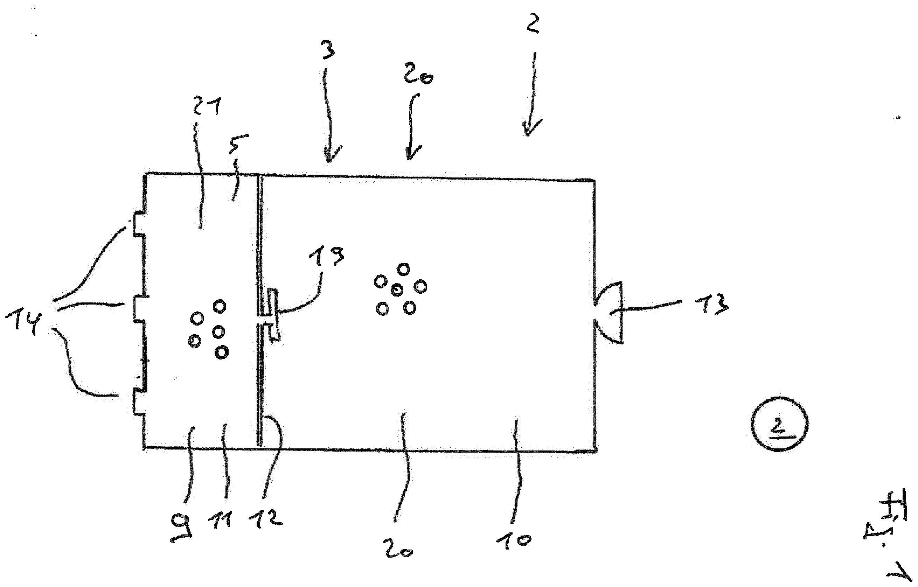

Fig. 1 eine Vorrichtung nach der ersten Ausführungsform mit einem Haupttriebwerk und einem Ausstosstriebwerk.

Das Ausstosstriebwerk 3 umfasst zwei Brennkammern 9; 20. Die Hauptbrennkammer 20 umfasst einen Haupttreibstoff 10, wogegen der Gegenschubbrennkammer 9 einen Gegenschubtreibstoff 11 aufweist.

Der Haupttreibstoff 10 der Hauptbrennkammer 20 ist mit Zündung zu Schubgas 8 verbrennbar. Das Schubgas 8 wird der Hauptdüse 13 zugeführt und wirkt auf das Haupttriebwerk 1 ein.

Zwischen der Hauptbrennkammer 20 und der Gegenschubbrennkammer 9 verläuft in Fig. 1 eine Trennwand 12, die den Haupttreibstoff 10 vom Gegenschubtreibstoff 11 trennt.

Das Bremstriebwerk 5 wirkt infolge einer verzögerten Zündung des Gegenschubtreibstoffs 11 zeitlich versetzt nach dem Start des Haupttriebwerks 1.

Durch Zündung des Gegenschubtreibstoffs 11 in der Gegenschubbrennkammer 9 ist ein Gegenschubgas 17; 21 erzeugbar, das durch die Gegenschubdüsen 14 austritt. Das Gegenschubgas 17; 21 wirkt auf das Ausstosstriebwerk 3 ein, das mit der Startvorrichtung 2 in Verbindung steht.

In Fig. 1 ist ein Zündverzögerer 19 angeordnet, der eine verzögerte Zündung des Gegenschubtreibstoffs 11 bewirkt. Die Zündung des Gegenschubtreibstoffs 11 erfolgt zeitlich nach der Zündung des Haupttreibstoffs 10 und in der Weise, dass das entstehende Gegenschubgas 17; 21 einen Austritt des Ausstosstriebwerks 3 aus der Startvorrichtung 2 vermeidet.

Fig. 2 zeigt eine Hauptbrennkammer 20, die mit Haupttreibstoff 10 gefüllt ist.

Die Hauptbrennkammer 20 ist über eine Verbindungsleitung 15 mit der Hauptdüse 13 verbunden.

An der der Hauptdüse 13 gegenüberliegenden Seite der Hauptbrennkammer 20 ist ein Zünder 22 vorgesehen, der die Zündung des Haupttreibstoffs 10 bewirkt.

Das Hauptantriebsgas 23 wird durch die Verbindungsleitung 15 der Hauptdüse 13 zugeführt.

Zusätzlich sind an die Verbindungsleitung 15 Gegenschubleitungen 16 angeschlossen, die der Versorgung der Gegenschubdüsen 14 mit Hauptantriebsgas 23 dienen.

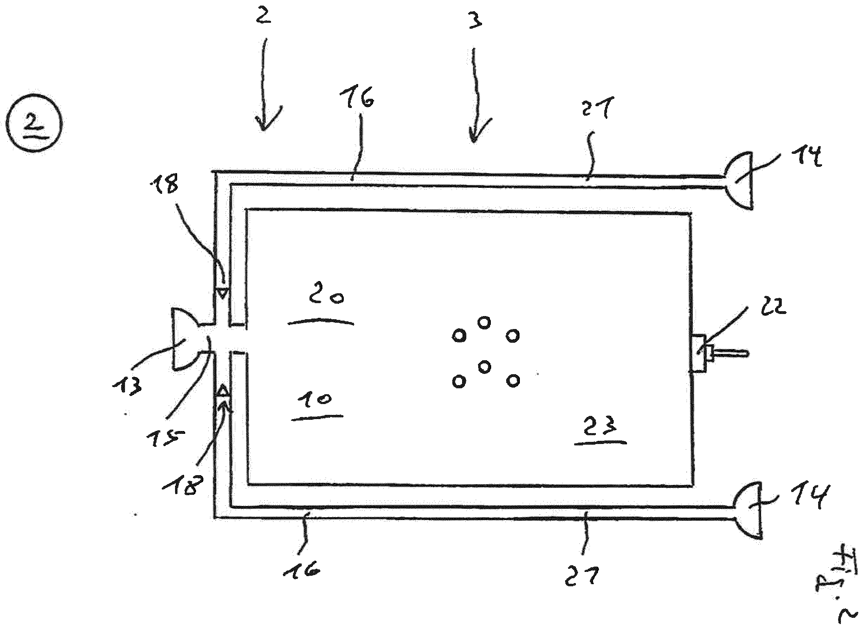

In Fig. 2 sind in den Verbindungsleitungen 15 Ventile 18 angeordnet, die die Gegenschubleitungen 16 zur Versorgung mit Hauptantriebsgas 23 freigeben. Die Öffnung der Ventile 18 erfolgt mittels einer nicht dargestellten Steuereinheit.

Mit Öffnung der Ventile 18 wird das Gegenschubgas 17; 21 neben der Hauptdüse 13 auch den Gegenschubdüsen 14 zugeführt. Das Hauptantriebsgas 23 wirkt nach der Zuführung und dem Ausstoss aus den Gegenschubdüsen 14 als Gegenschubgas 17; 21.

Mit Beschickung der Gegenschubdüsen 14 mit Gegenschubgas 17; 21 erfolgt die Abbremsung des Ausstosstriebwerkes 3 in der Startvorrichtung 2 zur Beschleunigung und zum Ausstoss eines Haupttriebwerks 1.

### Bezugsziffern

1. Haupttriebwerk
2. Startvorrichtung
3. Ausstosstriebwerk
4. Mittel zur Abbremsung
5. Bremstriebwerk
6. bleibt frei
7. Ausstossschub
8. Startschub
9. Gegenschubbrennkammer
10. Haupttreibstoff
11. Gegenschubtreibstoff
12. Trennwand
13. Hauptdüse
14. Gegenschubdüse
15. Hauptleitung/ Verbindungsleitung
16. Gegenschubleitung
17. GegenschubVentil
18. Zündungsverzögerer
19. Hauptbrennkammer
20. Gegenschubgas
21. Zünder
22. Hauptantriebsgas

## Patentansprüche

1. Vorrichtung umfassend
ein Haupttriebwerk (1), das als Marschflugkörper ausgebildet ist, der über eine eigene Steuervorrichtung verfügt, und
ein Ausstosstriebwerk (3), aufnehmbar in eine Startvorrichtung (2), wobei das Ausstosstriebwerk (3) der Beschleunigung des Haupttriebwerks (1) aus der Startvorrichtung (2) dient, und
das Ausstosstriebwerk (3) von dem Haupttriebwerk (1) trennbar ist,
**dadurch gekennzeichnet, dass** das Ausstosstriebwerk (3)
in einer Hauptbrennkammer (20) wenigstens einen auf das Haupttriebwerk (1) wirkenden Haupttreibstoff (10) aufweist
und ein Bremstriebwerk (5) mit einer Gegenschubbrennkammer (9) mit wenigstens einem auf das Ausstosstriebwerk (3) wirkenden Gegenschubtreibstoff (11) aufweist, und
dass das Ausstosstriebwerk (3) Mittel (4) zu seiner Abbremsung nach der Initiierung der Beschleunigung des Haupttriebwerks (1) umfasst, so dass das Ausstosstriebwerk (3) in der Startvorrichtung (2) verbleibt,
wobei das Mittel (4) zur Abbremsung des Ausstosstriebwerks (3) das Bremstriebwerk (5) ist, das verzögert gezündet wird, wobei durch Zündung des Gegenschubtreibstoffs (11) in der Gegenschubbrennkammer (9) ein Gegenschubgas (17; 21) erzeugbar ist, das durch wenigstens eine Gegenschubdüse (14) austritt.

2. Vorrichtung nach Anspruch 1, **dadurch gekennzeichnet, dass** die Hauptbrennkammer (20) und die Gegenschubbrennkammer (9) durch eine Trennwand (12) voneinander getrennt sind.

3. Vorrichtung nach Anspruch 1 oder 2, **dadurch gekennzeichnet, dass** das Ausstosstriebwerk (3) wenigstens eine auf das Haupttriebwerk (1) wirkende Hauptdüse (13) und wenigstens eine in entgegengesetzter Richtung auf das Ausstosstriebwerk (3) wirkende Gegenschubdüse (14) aufweist.

4. Vorrichtung nach Anspruch 1 oder 3, **dadurch gekennzeichnet, dass** das Ausstosstriebwerk (3) wenigstens eine auf das Haupttriebwerk (1) wirkende Hauptdüse (13) umfasst, wobei je eine Hauptleitung (15) mit der wenigstens einen Hauptdüse (13) verbunden ist.

5. Vorrichtung nach Anspruch 4, **dadurch gekennzeichnet, dass** das die Hauptleitung (15) über wenigstens eine Gegenschubleitung (16) mit der wenigstens einen Gegenschubdüse (14) verbunden ist.

6. Vorrichtung nach Anspruch 5, **dadurch gekennzeichnet, dass** zur Regelung des Gegenschubs (17) in der Gegenschubleitung (16) wenigstens ein Ventil (18) angeordnet ist.

7. Vorrichtung nach Anspruch 1, **dadurch gekennzeichnet, dass** der auf das Ausstosstriebwerk (3) wirkende Gegenschubtreibstoff (11) einen Zündungsverzögerer (19) aufweist.

8. Vorrichtung nach einem oder mehreren der vorhergehenden Ansprüche, **dadurch gekennzeichnet, dass** die Zündung mechanisch oder elektronisch auslösbar ist.

9. Startvorrichtung (2) mit einer Vorrichtung nach einem oder mehreren der Ansprüche 1 bis 8.

10. Verwendung einer Vorrichtung nach einem der Ansprüche 1 bis 8.

## Claims

1. A device comprising
a main engine (1) configured as a cruise missile having its own control device, and
an ejection engine (3) receivable in a launching device (2), wherein the ejection engine (3) serves to accelerate the main engine (1) out of the launching device (2), and wherein the ejection engine (3) is separable from the main engine (1),
**characterized in that** the ejection engine (3)
has in a main combustion chamber (20) at least a main propellant (10) acting on the main engine (1)
and has a brake engine (5) with a reverse thrust combustion chamber (9) with at least a reverse thrust propellant (11) acting on the ejection engine (3), and
that the ejection engine (3) comprises means (4) for its deceleration after initiating the acceleration of the main engine (1) so that the ejection engine (3) remains in the launching device (2),
wherein the means (4) for decelerating the ejection engine (3) is the brake engine (5), which is ignited in a delayed manner, wherein a reverse thrust gas (17; 21) is producible by igniting the reverse thrust propellant (11) in the reverse thrust combustion chamber (9), which exits through at least one reverse thrust nozzle (14).

2. Device according to claim 1, **characterized in that** the main combustion chamber (20) and the reverse thrust combustion chamber (9) are separated from each other by a separating wall (12).

3. Device according to claim 1 or 2, **characterized in that** the ejection engine (3) has at least one main nozzle (13) acting on the main engine (1) and at least one reverse thrust nozzle (14) acting in opposite direction on the ejection engine (3).

4. Device according to claim 1 or 3, **characterized in that** the ejection engine (3) comprises at least one main nozzle (13) acting on the main engine (1), wherein respectively one main line (15) is connected to the at least one main nozzle (13).

5. Device according to claim 4, **characterized in that** the main line (15) is connected to the at least one reverse thrust nozzle (14) via at least one reverse thrust line (16).

6. Device according to claim 5, **characterized in that** at least one valve (18) is arranged in the reverse thrust line (16) for controlling the reverse thrust (17).

7. Device according to claim 1, **characterized in that** the reverse thrust propellant (11) acting on the ejection engine (3) has an ignition delayer (19).

8. Device according to one or several of the preceding claims, **characterized in that** the ignition can be triggered mechanically or electronically.

9. Launching device (2) with a device according to one or several of claims 1 to 8.

10. Use of a device according to one of claims 1 to 8.

## Revendications

1. Dispositif comprenant
un propulseur principal (1) qui est réalisé sous forme de missile de croisière qui dispose d'un dispositif de commande propre, et
un propulseur d'éjection (3) qui peut être logé dans un dispositif de démarrage (2), le propulseur d'éjection (3) servant à l'accélération du propulseur principal (1) hors du dispositif de démarrage (2), et
le propulseur d'éjection (3) pouvant être séparé du propulseur principal (1),
**caractérisé en ce que** le propulseur d'éjection (3)
présente dans une chambre de combustion principale (20) au moins un combustible principal (10) agissant sur le propulseur principal (1) et présente un propulseur de freinage (5) avec une chambre de combustion pour inversion de poussée (9) avec au moins un combustible pour inversion de poussée (11) agissant sur le propulseur d'éjection (3), et
**en ce que** le propulseur d'éjection (3) comprend des moyens (4) pour son freinage après l'amorce de l'accélération du propulseur principal (1), de telle sorte que le propulseur d'éjection (3) reste dans le dispositif de démarrage (2),
le moyen (4) pour le freinage du propulseur d'éjection (3) étant le propulseur de freinage (5) qui est allumé avec retard, un gaz de poussée inverse (17 ; 21) pouvant être engendré par l'allumage du combustible pour inversion de poussée (11) dans la chambre de combustion pour inversion de poussée (9), lequel gaz s'échappe à travers au moins une tuyère d'inversion de poussée (14).

2. Dispositif selon la revendication 1, **caractérisé en ce que** la chambre de combustion principale (20) et la chambre de combustion pour inversion de poussée (9) sont séparées l'une de l'autre par une paroi de séparation (12).

3. Dispositif selon la revendication 1 ou 2, **caractérisé en ce que** le propulseur d'éjection (3) présente au moins une tuyère principale (13) agissant sur le propulseur principal (1) et au moins une tuyère d'inversion de poussée (14) agissant en direction opposée sur le propulseur d'éjection (3).

4. Dispositif selon la revendication 1 ou 3, **caractérisé en ce que** le propulseur d'éjection (3) comprend au moins une tuyère principale (13) agissant sur le propulseur principal (1), une conduite principale (15) étant respectivement reliée à ladite au moins une tuyère principale (13).

5. Dispositif selon la revendication 4, **caractérisé en ce que** la conduite principale (15) est reliée à ladite au moins une tuyère d'inversion de poussée (14) via au moins une conduite d'inversion de poussée (16).

6. Dispositif selon la revendication 5, **caractérisé en ce que** au moins une valve (18) est agencée dans la conduite d'inversion de poussée (16) pour réguler l'inversion de poussée (17).

7. Dispositif selon la revendication 1, **caractérisé en ce que** le combustible pour inversion de poussée (11) agissant sur le propulseur d'éjection (3) présente un retardateur d'allumage (19).

8. Dispositif selon l'une ou plusieurs des revendications précédentes, **caractérisé en ce que** l'allumage peut être déclenché mécaniquement ou électroniquement.

9. Dispositif de démarrage (2) comportant un dispositif selon l'une ou plusieurs des revendications 1 à 8.

10. Utilisation d'un dispositif selon l'une des revendications 1 à 8.
